# EUROPÄISCHE PATENTSCHRIFT

(11) **EP 2 179 683 B1**
(45) Veröffentlichungstag und Bekanntmachung des Hinweises auf die Patenterteilung: **27.06.2012**
(21) Anmeldenummer: 09013221.8
(22) Anmeldetag: 20.10.2009
(51) Int. Cl.: A47J 42/04

(54) **Gewürzmühle**
Condiment mill
Moulin de condiments

(30) Priorität: 24.10.2008 DE 102008053167
(43) Veröffentlichungstag der Anmeldung: 28.04.2010
(73) Patentinhaber: Silit-Werke GmbH & Co. KG, 88499 Riedlingen (DE)
(72) Erfinder: Bettinger, Stefanie, 88499 Riedlingen (DE); Roth, Klaus, 88527 Unlingen (DE)
(74) Vertreter: Grünecker, Kinkeldey, Stockmair & Schwanhäusser

(56) Entgegenhaltungen:
- EP-A- 0 535 493
- WO-A-00/28870
- WO-A-91/08697
- WO-A-98/40000

## Beschreibung

Die Erfindung bezieht sich auf eine Gewürzmühle der im Oberbegriff von Anspruch 1 erläuterten Art.

Eine derartige Gewürzmühle ist aus der EP-A-535493 bekannt. Bei der bekannten Gewürzmühle sind zwei oder noch mehr Mahlwerke, denen jeweils ein Vorratsbehälter für das zu mahlende Gut zugeordnet ist, zu einer einzigen Gewürzmühle kombiniert. Jedes der Mahlwerke ist jedoch wie jede normale Einzelmühle ausgebildet, d. h. das Mahlwerk und der zugeordnete Vorratsbehälter für das zu mahlende Gut sind mit fluchtend zueinander ausgerichteten Achsen versehen und in dieser Anordnung mit einer oder mehreren weiteren Einzelmühlen kombiniert. In dieser Kombination ist die Gewürzmühle jedoch relativ sperrig und schlecht zu handhaben. Bei der bekannten Gewürzmühle versucht man diesen Nachteil zu beheben, indem man ein Zwischenstück zwischen die verschiedenen Einzelmühlen einfügt, damit diese einen besser handhabbaren Abstand zueinander bekommen. Dies macht die Herstellung umständlich und die Mühle sperrig und unhandlich.

Auch andere im Stand der Technik bekannte kombinierte Gewürzmühlen zum Mahlen von wenigstens zwei verschiedenen Gewürzen, wie sie beispielsweise aus der DE-U-9416835 oder der DE-U-8809406 oder der WO91/08697 bekannt sind, verwenden das Prinzip, vollständige Einzelmühlen aus einem Vorratsbehälter und dem zugeordneten Mahlwerk miteinander zu kombinieren.

Aus der WO-A-98/40000 ist eine Kaffeemühle mit zwei Vorratsbehältern und V-förmig angeordneten Mahlwerken beschrieben. Diese Kaffeemühle ist jedoch für Kaffeeautomaten ausgebildet, wobei die Mahlwerke elektrisch zu betätigen sind.

Der Erfindung liegt die Aufgabe zugrunde, eine Gewürzmühle zum Mahlen unterschiedlicher Gewürze bereitzustellen, die bequem handhabbar und einfach herstellbar ist.

Die Aufgabe wird durch die Merkmale des Anspruchs 1 gelöst.

Durch die erfindungsgemäße Zusammenfassung der Vorratsbehälter für die unterschiedlichen Gewürze zu einer Vorratsbehälter-Einheit wird die Herstellung erleichtert und durch das Ansetzen wenigstens eines der Mahlwerke im Winkel dazu wirken die Vorratsbehälter als Abstandshalter für die Mahlwerke, sodass die erfindungsgemäße Gewürzmühle auch von Personen mit größeren Händen problemlos an der Vorratsbehälter-Einheit ergriffen werden kann.

Zweckmäßigerweise ist die Vorratsbehälter-Einheit mit einem Standfuß versehen, sodass die erfindungsgemäße Gewürzmühle mit den Vorratsbehältern nach unten auf dem Tisch abgestellt werden kann, während die Mahlwerke, bei denen immer die Gefahr besteht, dass dort noch gemahlenes Gut hängt, das den Tisch verschmutzen könnte, im Abstand zum Tisch gehalten werden.

Bevorzugt sind alle Mahlwerke im Winkel zur Vorratsbehälter-Einheit angeordnet.

Werden die Vorratsbehälter in einem gemeinsamen Gehäuse untergebracht, wird das Erscheinungsbild vereinheitlicht und die Herstellung weiter erleichtert.

Eine zweckmäßige Anordnung der Mahlwerke und der Vorratsbehälter besteht darin, die Vorratsbehälter zu einer Art Stamm zusammenzufassen, von denen die Mahlwerke in Form von Ästen abstehen.

Eine besonders bevorzugte Anordnung besteht in einer Y-Form.

Ausführungsbeispiele der Erfindung werden nachfolgend anhand der Zeichnungen näher erläutert. Es zeigen:
- Fig. 1: einen Querschnitt durch ein erstes Ausführungsbeispiel einer erfin- dungsgemäßen Gewürzmühle, und
- Fig. 2 - Fig. 7: verschiedene Ausführungsformen der erfindungsgemäßen Gewürzmüh- le.

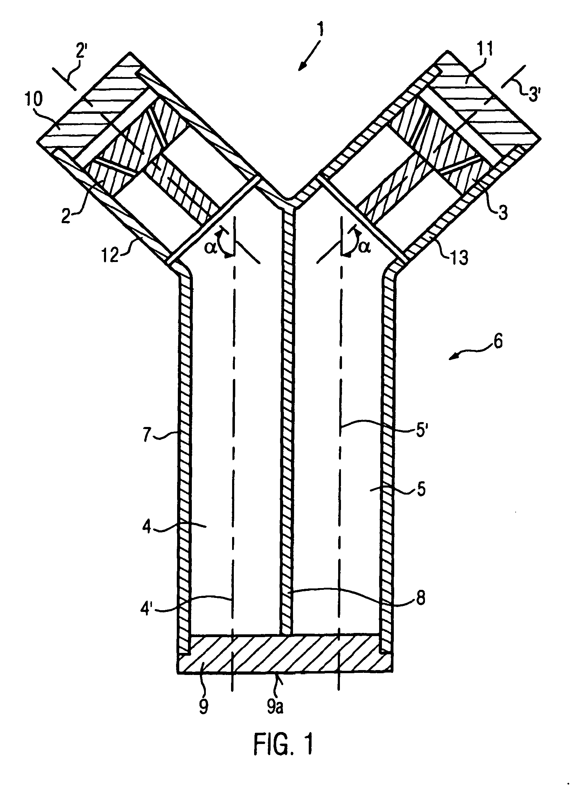

Fig. 1 zeigt in stark schematisierter Querschnittsdarstellung eine erfindungsgemäße Gewürzmühle 1, die ein erstes Mahlwerk 2 und zweites Mahlwerk 3 aufweist, die zum Mahlen von Gewürzen, wie beispielsweise Pfeffer, Salz, Kräuter oder dgl. ausgebildet sind. Die Mahlwerke sind herkömmlicher Art. Die Gewürzmühle 2 enthält weiterhin zwei Vorratsbehälter 4 bzw. 5, die das zu mahlende Gut vor dem Mahlen aufnehmen, wobei der Vorratsbehälter 4 dem Mahlwerk 2 und der Vorratsbehälter 5 dem Mahlwerk 3 zugeordnet ist. Die Vorratsbehälter 4, 5 sind zu einer Vorratsbehälter-Einheit 6 mit einer Längsmittellinie 6' zusammengefasst und bevorzugt in einem gemeinsamen Gehäuse 7 untergebracht, wobei das Gehäuse 7 rohrförmig mit einem kreisförmigen, quadratischen, rechteckigen, ovalen oder sonstigen Querschnitt ausgebildet und durch wenigstens eine Trennwand 8 in die Vorratsbehälter 4, 5 unterteilt ist. Die Vorratsbehälter 4, 5 erstrecken sich in Längsrichtung des Gehäuses 7 und weisen bevorzugt parallele Längsmittellinien 4' bzw. 5' auf. Der Begriff "Längsmittetinie" soll nicht wörtlich verstanden werden, da die Vorratsbehältereinheit und die einzelnen Vorratsbehälter keinen rotationssymmetrischen Querschnitt aufzuweisen brauchen, sondern beispielsweise einen halbkreisförmigen, quadratischen, rechteckigen, ovalen oder unregelmäßig geformten Querschnitt haben können. Der Begriff der "Längsmittellinie" bedeutet somit die Haupterstreckungsrichtung der Vorratsbehältereinheit bzw. der Vorratsbehälter.

Die Vorratsbehälter-Einheit 6 ist als Handgriff zum Handhaben der Gewürzmühle 1 für Transport und Betätigung ausgebildet und weist zu diesem Zweck z. B. einen von einer Hand zu umgreifenden Außendurchmesser, eine handfreundliche Oberfläche od. dgl. auf.

An seinem in Fig. 1 gesehenen unteren Ende sind die Vorratsbehälter 4, 5 durch einen Verschlussdeckel 9 verschlossen, der bevorzugt beide Vorratsbehälter 4 verschließt, jedoch auch geteilt zum getrennten Öffnen und Verschließen der Vorratsbehälter beim Befüllen ausgebildet sein kann.

Der Verschlussdeckel 9 enthält im dargestellten Ausführungsbeispiel eine ebene, als Standfläche geeignete Unterseite 9a, sodass der Deckel 9 als Standfuß wirken kann auf den die erfindungsgemäße Gewürzmühle 1 abgestellt werden kann.

Die Mahlwerke 2, 3 sind so angeordnet, dass sie mit den dem Verschlussdeckel 9 gegenüberliegenden Enden der Vorratsbehälter 4, 5 in Fließverbindung stehen, wobei ihre Mahlwerksachse 2' bzw. 3' in einem Winkel α zur Längsmittellinie 4' bzw. 5' des zugeordneten Vorratsbehälters 4, 5 bzw. der Vorratbehälter-Einheit 6 verläuft, so dass die Gewürzmühle 1 Y-förmig ausgestaltet ist. Der Winkel α beträgt bevorzugt zwischen 90 und 150°, insbesondere 130 bis 140°, kann jedoch je nach Platzbedarf des Mahlwerkes 2, 3 auch andere Werte annehmen.

An den den Vorratsbehältern 4, 5 abgewandten Seiten können die Mahlwerke 2, 3 offen sein bzw., wie dargestellt, über einen Deckel 10 bzw. 11 verschlossen werden.

Im dargestellten Ausführungsbeispiel sind die Mahlwerke 2, 3 in einem Gehäuseteil 12 bzw. 13 untergebracht, die jeweils drehbar mit dem Gehäuse 7 der Vorratsbehälter-Einheit 6 verbunden sind, sodass das jeweilige Mahlwerk 2, 3 in üblicher Weise durch Relatiwerdrehung der Gehäuse 7 und 12 bzw. 7 und 13 zum Mahlen der Gewürze betätigbar sind.

Im dargestellten Ausführungsbeispiel sind Mahlwerke und Vorratsbehälter so ausgebildet, dass die Vorratsbehälter-Einheit 6 eine Art Stamm bildet, von dem die Mahlwerke 2, 3 in der Art von Ästen unter dem Winkel α wegstehen. Dabei ist der Stamm als Handgriff ausgebildet, an dem die Gewürzmühle 1 zum Transport und zur Betätigung bequem ergriffen werden kann.

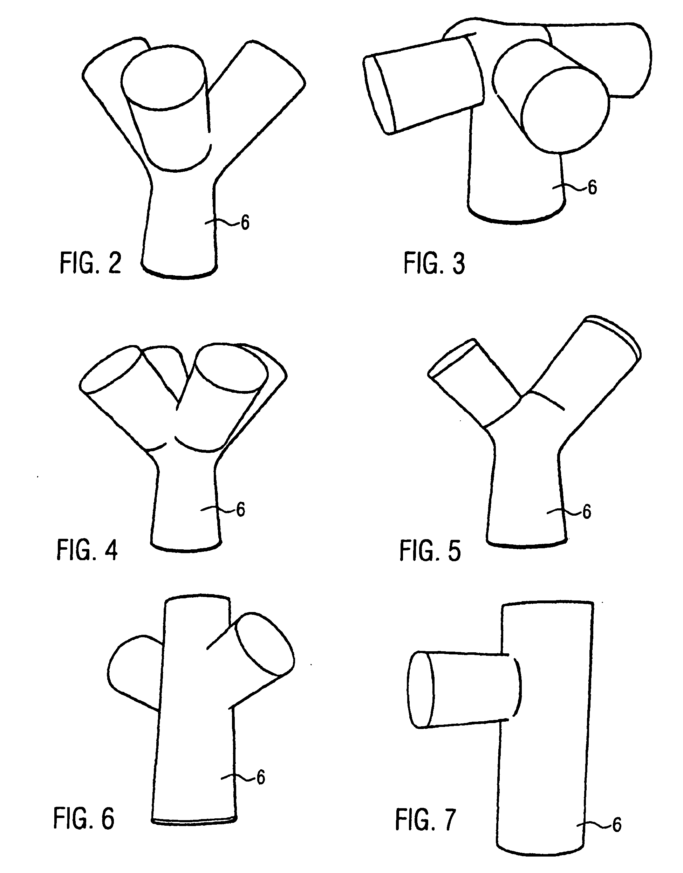

Die erfindungsgemäßen Prinzipien sind in einer Vielzahl von Ausführungsformen der Gewürzmühle 1 einzusetzen, wie den Figuren 2 bis 7 zu entnehmen ist. So können mehr als zwei Mahlwerke in räumlicher Y-Form zusammengestellt werden, wie in den Figuren 2 und 4 ersichtlich. Die Mahlwerke können weiterhin unter einem Winkel von 90° zur Vorratsbehätter-Einheit verlaufen, wie beispielsweise den Figuren 3 und 7 zu entnehmen ist. Die Mahlwerke innerhalb einer einzigen Gewürzmühle können weiterhin unter unterschiedlichen Winkel zur Vorratsbehälter-Einheit 6 verlaufen, wie beispielsweise Fig. 5 zeigt. Ebenfalls in Fig. 5 ist gezeigt, dass gegebenenfalls unterschiedlich ausgebildete Mahlwerke zur Gewürzmühle kombinierbar sind. Es ist weiterhin möglich, ein weiteres Mahlwerk direkt in Verlängerung der Längserstreckung der Vorratsbehälter-Einheit 6 anzuordnen, wie dies in den Figuren 6 und 7 der Fall ist. Andere Abwandlungen und Kombinationen aus den Anordnungen der Figuren 1 bis 7 sind ohne Abweichung von den erfindungsgemäßen Prinzipien möglich.

## Patentansprüche

1. Gewürzmühle (1) mit einem Handgriff und wenigstens einem ersten und einem zweiten Mahlwerk (2, 3), denen jeweils ein Vorratsbehälter (4, 5) für zu mahlendes Gut zugeordnet ist, **dadurch gekennzeichnet, dass** die Vorratsbehälter (4, 5) zu einer Einheit (6) zusammengefasst sind, die Vorratsbehälter-Einheit (6) als Handgriff ausgebildet ist, und die Achse (2', 3') wenigstens eines Mahlwerks (2, 3) in einem Winkel (α) zur Mittellinie (4', 5') des zugeordneten Vorratsbehälters (4, 5) verläuft, so dass die Achse (2', 3') dieses wenigstens einen Mahlwerks (2,3) und die Mittellinie (4,5) des zugeordneten Vorratsbehälters (4,5) nicht fluchtend zueinander ausgerichtet sind.

2. Gewürzmühle nach Anspruch 1, **dadurch gekennzeichnet, dass** die Vorratsbehälter-Einheit (6) mit einem Standfuß (9a) versehen ist.

3. Gewürzmühle nach einem der Ansprüche 1 bis 2, **dadurch gekennzeichnet, dass** wenigstens ein Vorratsbehälter (4, 5) mit einem als Standfuß (9a) ausgebildeten Deckel (9) versehen ist.

4. Gewürzmühle nach einem der Ansprüche 1 bis 3, **dadurch gekennzeichnet, dass** die Achsen (2', 3') aller Mahlwerke (2, 3) in einem Winkel (α) zur Mittellinie (4', 5') des jeweils zugeordneten Vorratsbehälters (4, 5) verlaufen.

5. Gewürzmühle nach einem der Ansprüche 1 bis 4, **dadurch gekennzeichnet, dass** die Vorratsbehälter (4, 5) in einem gemeinsamen Gehäuse (7) untergebracht sind.

6. Gewürzmühle nach einem der Ansprüche 1 bis 5, **dadurch gekennzeichnet, dass** die Vorratsbehälter-Einheit (6) einen Stamm und die Mahlwerke (2, 3) jeweils einen Ast bilden, der in einem Winkel (α) mit dem Stamm verbunden ist.

7. Gewürzmühle nach einem der Ansprüche 1 bis 6, **gekennzeichnet durch** eine Y-förmige Ausgestaltung.

## Claims

1. Condiment mill (1) having a handle and at least one first and one second grinder (2, 3) to each of which is assigned a reservoir (4, 5) for a product to be ground, **characterized in that** the reservoirs (4, 5) are combined into one unit (6), the reservoir unit (6) is configured as a handle, and the axis (2', 3') of at least one grinder (2, 3) runs at an angle (α) to the centre line (4', 5') of the assigned reservoir (4, 5) such that the axis (2', 3') of this at least one grinder (2, 3) and the centre line (4', 5') of the arranged reservoir (4, 5) are not aligned flush with each other.

2. Condiment mill according to claim 1, **characterized in that** the reservoir unit (6) is provided with a base (9a).

3. Condiment mill according to one of claims 1 to 2, **characterized in that** at least one reservoir (4, 5) is provided with a lid (9) configured as a base (9a).

4. Condiment mill according to one of claims 1 to 3, **characterized in that** the axes (2', 3') of all the grinders (2, 3) run at an angle (α) to the centre line (4', 5') of the assigned reservoir (4, 5) in each case.

5. Condiment mill according to one of claims 1 to 4, **characterized in that** the reservoirs (4, 5) are accommodated in a common housing (7).

6. Condiment mill according to one of claims 1 to 5, **characterized in that** the reservoir unit (6) forms a trunk and the grinders (2, 3) each form a branch which is joined to the trunk at an angle (α).

7. Condiment mill according to one of claims 1 to 6, **characterized by** a Y-shaped configuration.

## Revendications

1. Moulin à condiments (1) comportant une poignée et au moins un premier broyeur et un deuxième broyeur (2, 3), associés chacun à un réservoir (4, 5) pour le produit à moudre, **caractérisé en ce que** les réservoirs (4, 5) sont combinés en une unité (6), l'unité-réservoir (6) est conformée comme une poignée, et l'axe (2', 3') d'au moins un broyeur (2, 3) forme un angle (α) par rapport à la ligne médiane (4', 5') du réservoir associé (4, 5), de telle sorte que l'axe (2', 3') dudit au moins un broyeur (2, 3) et la ligne médiane (4', 5') du réservoir associé (4, 5) ne sont pas alignés l'un par rapport à l'autre.

2. Moulin à condiments selon la revendication 1, **caractérisé en ce que** l'unité-réservoir (6) est pourvue d'un pied de support (9a).

3. Moulin à condiments selon l'une des revendications 1 à 2, **caractérisé en ce qu'**au moins un réservoir (4, 5) est pourvu d'un couvercle (9) conformé comme un pied de support (9a).

4. Moulin à condiments selon l'une des revendications 1 à 3, **caractérisé en ce que** les axes (2', 3') de tous les broyeurs (2, 3) forment chacun un angle (α) par rapport à la ligne médiane (4', 5') de leur réservoir associé (4, 5).

5. Moulin à condiments selon l'une des revendications 1 à 4, **caractérisé en ce que** les réservoirs (4, 5) sont agencés dans un boîtier commun (7).

6. Moulin à condiments selon l'une des revendications 1 à 5, **caractérisé en ce que** l'unité-réservoir (6) forme un tronc et les broyeurs (2, 3) forment chacun une branche, inclinée selon un angle (α) par rapport au tronc.

7. Moulin à condiments selon l'une des revendications 1 à 6, **caractérisé par** une configuration en forme de Y.
